# EUROPEAN PATENT SPECIFICATION

(11) **EP 2 098 434 B1**
(45) Date of publication and mention of the grant of the patent: **02.01.2013**
(21) Application number: 09163789.2
(22) Date of filing: 25.02.2003
(51) Int. Cl.: B62D 1/16

(54) **Steering equipment for vehicles**
Lenkausstattung für eine Fahrzeuglenkung
Equipement pour direction de véhicule

(30) Priority: 04.03.2002 IT BO20020107
(43) Date of publication of application: 09.09.2009
(62) Divisional of application: 03100447.6
(73) Proprietor: CNH Italia S.p.A., 10135 Torino (IT)
(72) Inventor: Mazzucchi, Franco, 41050, Ciano nel Frignano (Modena) (IT); Carreri, Andrea, 41037, Modena (IT); Sedoni, Enrico, 41100, Modena (IT); Sereni, Eugenio, 41100, Modena (IT)
(74) Representative: CNH IP Department

(56) References cited:
- EP-A- 1 142 773
- DE-A- 19 625 966
- DE-A1- 10 041 590
- US-A- 3 308 427
- US-A- 4 078 628
- PATENT ABSTRACTS OF JAPAN vol. 2000, no. 20, 10 July 2001 (2001-07-10) & JP 2001 076593 A (YAZAKI CORP), 23 March 2001 (2001-03-23)

## Description

The present invention relates to steering equipment for vehicles, and more particularly, although not exclusively, to steering equipment for agricultural vehicles, such as tractors, combine harvesters and forage harvesters.

In an agricultural vehicle it is known to use steering equipment of the type comprising a steering unit, which in turn comprises a steering column having a given longitudinal axis, a transmission shaft mounted inside the steering column for rotating about the aforesaid axis and a steering wheel mounted on the transmission shaft. Additionally, a control device for actuating an operating unit may be provided. The control device may be operable e.g. to induce conversion between "conventional steering mode" and "fast steering mode" as described in EP-A-1.142.773.

The steering unit is designed to control the steering of a pair of wheels of the vehicle by means of interposition of a hydraulic steering valve, which enables the steering wheel to continue to rotate about the aforesaid axis even when the wheels have reached their maximum steering angle. Consequently, a given steering angle of the wheels therefore does not correspond to a given position of the steering wheel about the aforesaid axis.

Known steering equipment of the type described above presents the serious drawback represented by the fact that, in said steering equipment, the control device is normally mounted on the dashboard of the vehicle, and actuation thereof forces the operator, who is normally already occupied in operating other functions such as a gear change, to let go of the steering wheel with both hands and thus to perform a relatively dangerous operation. Moreover, when the control device, in order to remain active, requires an uninterrupted actuation, then the operator is forced to stop operating other functions and to return one hand to the steering wheel for controlling steering.

DE-196 25 966 relates to steering-wheel finger-tip controls for motor vehicle which has controls mounted on a console. The control console is ring-shaped and is mounted behind the steering wheel to be reached by the finger tips. The driver is able to retain grip on the steering wheel with the palm of the hand. The finger tip force on the controls also increases the grip on the steering wheel. The console has a larger diameter than the steering wheel and is in several segments supported on the steering column cowl. The separate controls replace the stalk mounted controls. The switches are operated by pressure under the console i.e. by pulling up against the steering wheel. The position of the console is adjustable to match different sizes of hand. However, a disadvantage of the control console is that the console is always in the vicinity of the steering wheel and can interfere with the normal working operations when the operation of the console is not needed.

The purpose of the present invention is to provide steering equipment for a vehicle which is free from the drawbacks referred to above.

Another similar device according to the preamble of claim 1 is known from the US 3308427.

According to the present invention, there is provided steering equipment for a vehicle, as claimed in Claim 1.

The present invention will now be described further, by way of example, with reference to the accompanying drawings, in which :
Figure 1 is a schematic side view of a preferred embodiment of the steering equipment of the present invention;
Figures 2 and 3 are perspective views of a detail of Figure 1, illustrated in two different operative positions;
Figure 4 is a schematic side view of a further embodiment of the steering equipment of the present invention; and
Figure 5 is a perspective view of a detail of Figure 4.

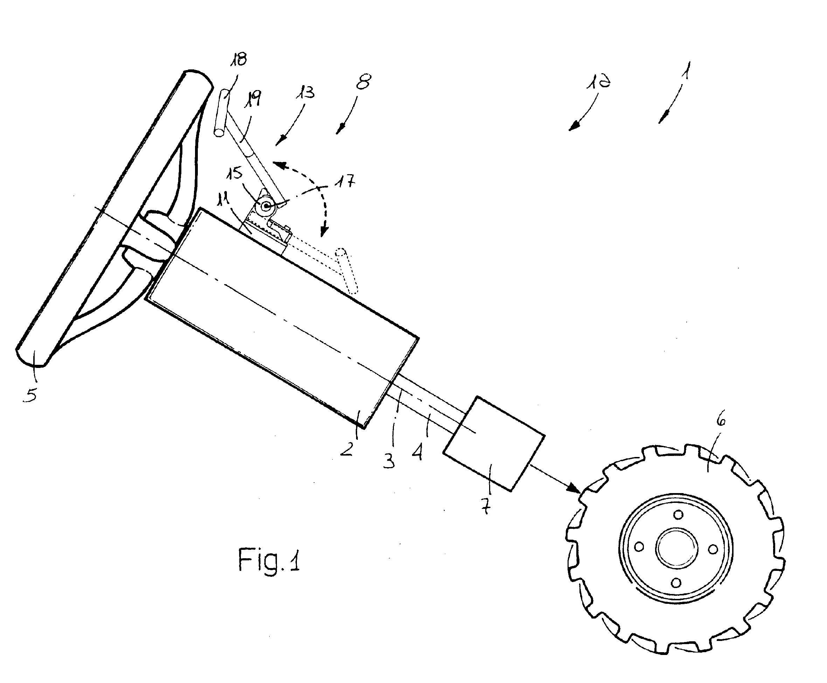

With reference to Figure 1, the reference number 1 designates, as a whole, steering equipment for vehicles, in particular for agricultural vehicles, the said equipment comprising a steering unit 1a, which in turn comprises a tubular steering column 2 extending along an axis 3 and connected in a known way to a chassis (not illustrated) of the vehicle. A tubular transmission shaft 4 is mounted inside the steering column 2 co-axially with respect to the axis 3, and a steering wheel 5 is fitted on one end of the shaft 4 for controlling the steering of a pair of wheels 6 (only one of which is represented in Figure 1) by means of a hydraulic unit 7 of the type described in the patent application No. EP-A-1.142.773.

The steering unit 1a comprises a control device 8 acting upon the hydraulic unit 7 for varying a steering ratio, i.e., the ratio between the angle of rotation of the steering wheel 5 about the axis 3 and the angle of steering of the wheels 6, between a first relatively large value k1, which is characteristic of a first mode of operation, defined as "conventional steering", and a second relatively small value k2, which is characteristic of a second mode of operation, defined as "fast steering".

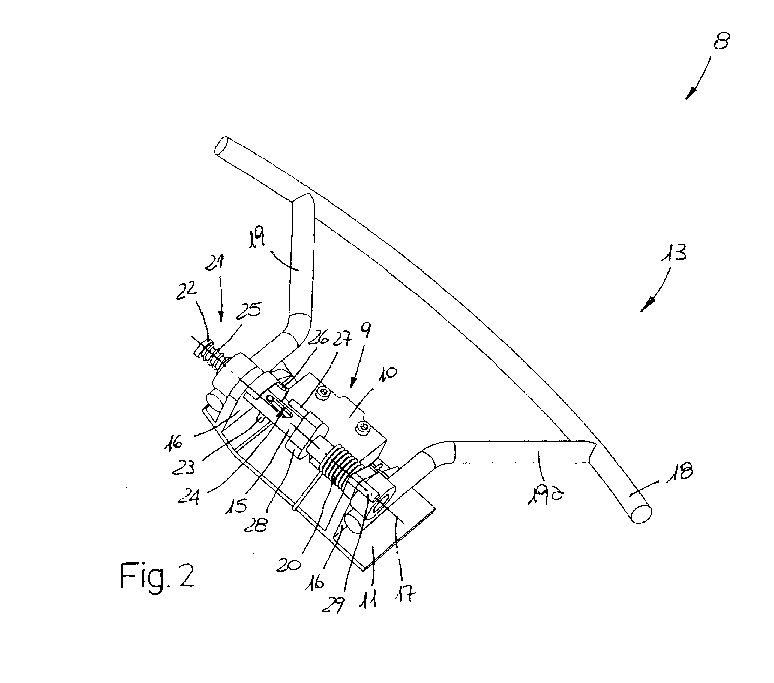

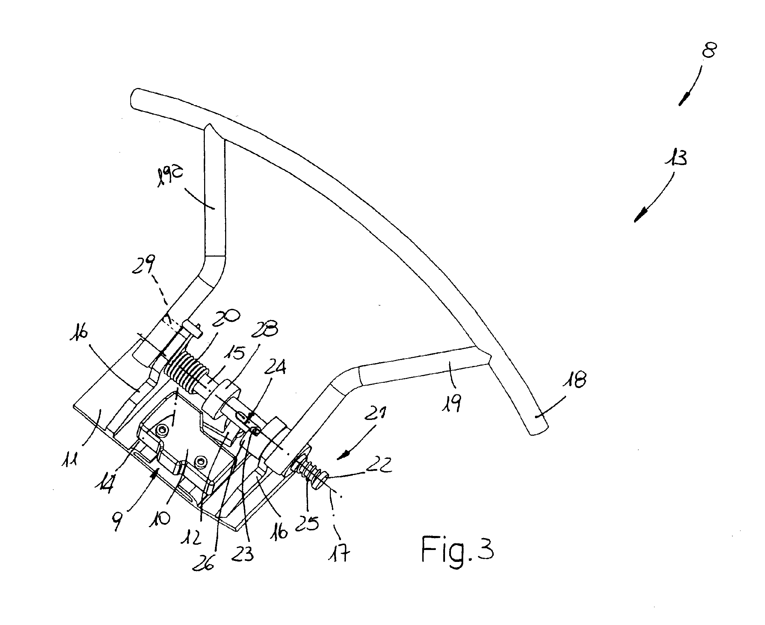

With reference to Figures 2 and 3, the device 8 comprises a switch 9 of a known type, which is connected to an electronic control unit (not illustrated) designed to selectively control operation of the hydraulic unit 7 in response to a signal coming from the switch 9. The switch 9 comprises a fixed part 10 mounted on a substantially plane plate 11 fixed to the steering column 2 and a mobile part defined by an arm 12 (figure 3) hinged to the part 10 so as to oscillate relative thereto under the thrust of an actuator device 13, about a pivot axis 14 substantially perpendicular to the plate 11.

The device 13 comprises a tubular shaft 15 coupled pivotally to two ribs 16 projecting from the plate 11. The shaft 15 is able to oscillate, with respect to the ribs 16, about a longitudinal axis 17 that is substantially orthogonal to the axes 3 and 14. The device 13 further comprises a control member 18, which substantially has the shape of a sector of a circle and is fixed to the shaft 15 by means of two arms 19, 19a fixed to the ends of the shaft 15.

The member 18 is able to pivot about axis 17 under the thrust exerted by an operator and against the thrust of a cylindrical helical spring 20. Spring 20 is fitted on the shaft 15 co-axially with respect to the axis 17 and set between the plate 11 and arm 19a. The member 18 pivots about the axis 17 in a counterclockwise direction, as viewed in Figures 1 and 2, from a resting position (indicated by a dashed line in Figure 1), in which the member 18 is set at a given distance from the steering wheel 5, to an operative position (indicated by a solid line in Figure 1), in which the member 18 is set in a position which is substantially coaxial with respect to the axis 3. The member 18 is placed in the resting position whenever inadvertent actuation of the device 8 should be avoided.

The member 18 is clamped in its resting and operative positions by means of a clamping device 21 comprising a release button 22, which is engaged in such a way that it can turn and slide axially through the shaft 15, and is angularly clamped on the shaft 15 by means of a pin 23, which extends outwards from an outer surface of the button 22 to engage, in a slidable and angularly fixed manner, a slit 24 made radially through the shaft 15.

The device 21 further comprises a cylindrical helical spring 25, which is fitted on the button 22 co-axially with respect to the axis 17. The spring 25 is provided between the shaft 15 and the button 22, and is designed to keep the button 22 in a clamping position (Figures 2 and 3), in which the pin 23 is operable to engage an end-of-travel element 26 both when the member 18 is set in its resting or its operative position. The element 26, which is fixedly attached to one of the ribs 16, basically has the shape of a sector of a circle which is coaxial to the axis 17, and extends from one of the ribs 16 in the direction of the other rib 16.

The arm 12 of the switch 9 is operated by means of a pin 27, which extends parallel to the axis 17 and projects from a central widened portion 28 of the shaft 15. When the member 18 is displaced into its operative position, the pin 27 is brought into touching contact with the arm 12 (Figure 3) however initially without moving the arm 12.

The pin 27 is operable to rotate the arm 12 about the axis 14 into a position for closing the switch 9 upon a further displacement of the member 18 (in a counterclockwise direction, as viewed in Figure 1, and in a clockwise direction, as viewed in Figure 3), against the thrust of the spring 20 and under the thrust exerted by the operator. As such, the member 18 is moved from its operative position into an actuation position (not illustrated) until the arm 19a comes into contact with an end-of-travel element 29 projecting from the corresponding rib 16, parallel to the axis 17.

In use, the displacement of the member 18 from its resting position to its operative position is initiated by pushing the button 22 towards the nearby rib 16 along the axis 17 and into a releasing position, in which the pin 23 disengages from the element 26. Then, the member 18 is rotated about the axis 17 (in a counterclockwise direction, as viewed in Figures 1 and 2) against the thrust of the spring 20. Finally, both the button 22 and the member 18 are released in order to enable the button 22 to set itself once again in its clamping position and, consequently, to enable the pin 23 to engage the other side of element 26.

Further movement of the member 18 from its operative position to its actuation position is performed by displacing the member 18 about the axis 17 (in a counterclockwise direction, as viewed in Figure 1) against the thrust of the spring 20 so as to bring the arm 19a into engagement with the end-of-travel element 29. By this action, pin 27 rotates the arm 12 into the position for closing the switch 9.

According to an alternative embodiment (not illustrated), the member 18 is provided with an encircling sleeve, which is located between the arms 19, 19a and is connected in a slidable way to the member 18. The sleeve is somewhat shorter than the distance between the two arms 19, 19a and is normally kept in a central position by means of two springs, which are set at the ends of the sleeve between the sleeve and the arms 19, 19a respectively.

In the absence of the above-mentioned sleeve, the simultaneous actuation of the steering wheel 5 and of the member 18 is rendered somewhat inconvenient by the fact that the operator must displace the member 18 with his hand between the operative position and the actuation position and, at the same time, must slide his hand along the member 18 in order to accompany rotation of the steering wheel 5 about the axis 3.

The slidable assembly of the sleeve on the member 18 enables the operator instead to turn the steering wheel 5 about the axis 3 with his hand and, at the same time, to displace the member 18 between its operative position and its actuation position by gripping the sleeve firmly. The presence of the sleeve thus prevents the need for the operator to slide his hand along the member 18. Only small movements of the sleeve are required considering that, once "fast steering" mode is chosen, only little rotation of the steering wheel 5 is needed to quickly turn the wheels 6.

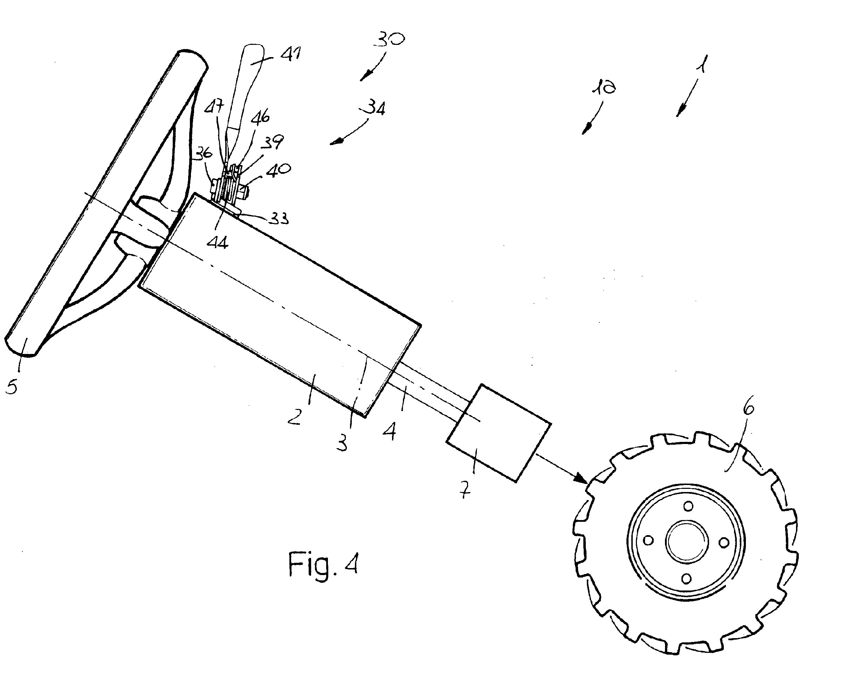

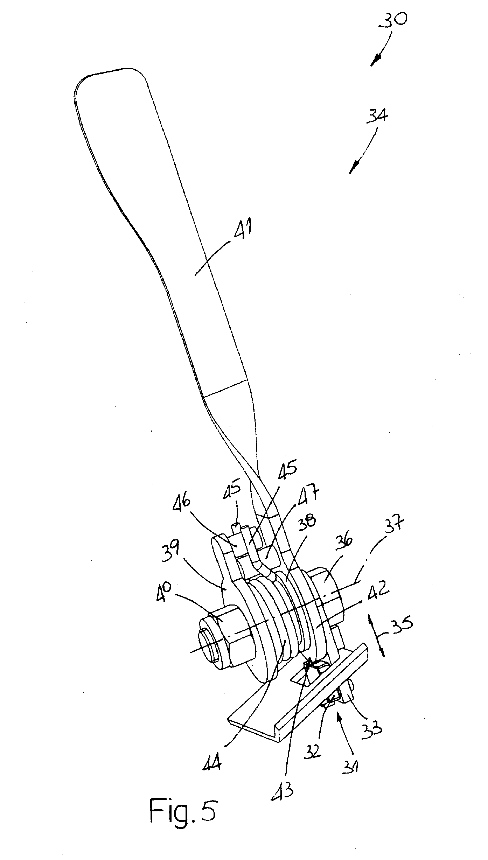

A further embodiment shown in Figures 4 and 5 differs from what is illustrated in the previous figures in that the steering unit 1a comprises a different control device 30, which in turn comprises a switch 31 of a known type. The switch 31 is connected to an electronic control unit (not illustrated) operable to selectively control operation of the hydraulic unit 7 in response to a signal coming from the switch 31.

The switch 31 comprises a fixed portion 32 mounted on a plate 33 fixed to the steering column 2 and a mobile portion defined by a button (not illustrated) coupled in a known way to the portion 32 for performing rectilinear displacements, with respect to the portion 32 and under the thrust of an actuator device 34, in a given direction 35 away from and towards a position for closing of the switch 31.

The device 34 comprises a bolt 36, which extends through the plate 33 and has a longitudinal axis 37 transverse to the direction 35. The bolt 36 is engaged in such a way that it can turn and slide axially through a cylindrical spacer 38 and a washer 39, which are axially and angularly clamped on the bolt 36 by means of a locknut 40, screwed on one free end of the bolt 36 to tighten the spacer 38 and the washer 39 against the plate 33.

The button (not illustrated) of the switch 31 is actuated by means of a control lever 41, which has a central hub 42 coaxial to the axis 37. The lever 41 extends upwards from the hub 42, and is coupled in such a way that it can turn and is axially fixed to the spacer 38 so as to oscillate, with respect to the plate 33, about the axis 37.

The lever 41 is normally kept in an operative position (Figure 5), in which the aforesaid button (not illustrated) is substantially set outside the portion 32 and inside a corresponding seat 43 made on the hub 42 by a cylindrical helical spring 44. The spring 44 is fitted on the spacer 38 coaxially with respect to the axis 37 and has two free ends set on opposite sides of two pins 46, 47 parallel to the axis 37. The pin 46 projects from the washer 39 towards the lever 41, whereas the pin 47 projects from the lever 41 towards the washer 39.

In use, the lever 41 is able to move about the axis 37, against the thrust of the spring 44 and under a thrust exerted by the operator indifferently either in the clockwise direction or in the counterclockwise direction, from its operative position to two actuation positions (not illustrated) of the switch 31. In each of the actuating positions, the aforesaid button (not illustrated) is substantially moved downwardly within the portion 32 under the thrust of the hub 42, thereby actuating the switch 31. In this connection, it should be pointed out that, upon displacement of the lever 41 from its operative position to its actuation positions, one of the ends 45 of spring 44 engages the pin 46 and the other end 45 engages the pin 47.

The arrangement of the control devices 8, 30 on the steering column 2 thus enables the hydraulic unit 7 to be operated with relative ease and convenience in such a way that the steering ratio will assume the value k1 when the member 18 and the lever 41 set themselves in their operative positions and the value k2 when the member 18 and the lever 41 set themselves in their positions of actuation of the switches 9 and 31, respectively.

## Claims

1. Steering equipment for a vehicle comprising a steering unit (1a), which in turn comprises a steering column (2) having a first given longitudinal axis (3); a transmission shaft (4) mounted inside the steering column (2) for rotating about said first axis (3); and a steering wheel (5) mounted on the transmission shaft (4) for controlling steering of at least one wheel (6) of the vehicle; hydraulic means (7) provided between the steering unit (1a) and the wheel (6); a control device (8; 30) comprising a switch (9; 31) and a control member (18; 41), which can move away from and towards a position of actuation of the switch (9; 31) and a shaft (15, 36) having a second longitudinal axis (17, 37) fixed to said control member (18, 41), which is mounted so that it can turn about said axis (17, 37) and is provided with an actuator member (27) operable to actuate said switch (9, 31) upon a displacement of the control member (18, 41) from the operative position to the actuation position; and
**characterized in that** the control device (8; 30) is acting on said hydraulic means (7) for varying the ratio between an angle of rotation of the steering wheel (5) about the first axis (3) and an angle of steering of the wheel (6), and the control device (8) further comprises a clamping device (21) for clamping the control member (18) in said operative position, the clamping device (21) comprises a pin (23) set transverse to said second axis (17) and coupled in an angularly fixed way to said shaft (15) for turning about the second axis (17), and end-of-travel means (26) operable to arrest the pin (23) when the control member (18) is set in the operative position.

2. The equipment according to claim 1, **characterized in that** the control member (18) substantially has the shape of the sector of a circle and is mobile between said actuation position and an operative position, in which the control member (18) is substantially co-axial with said first axis (3).

3. The equipment according to claim 2, **characterized in that** the control device (8) further comprises actuator means operable to move the control member (18) from the position of actuation to the operative position.

4. The equipment according to claim 3, **characterized in that** said actuator means comprise at least one first spring (20) operable to maintain the control member (18) in said operative position.

5. The equipment according to claim 4, **characterized in that** said actuator means are further operable to move the control member (18) from said operative position to a resting position; the control member (18) being positioned, when in the operative position, at a first distance from the steering wheel (5) and, when in the resting position, at a second distance from the steering wheel (5) greater than the first distance.

6. The equipment according to claim 5, **characterized in that** said shaft (15) is tubular and has a slit (24) made radially through the shaft (15).

7. The equipment according to claim 6, **characterized in that** the clamping device (21) is operable to arrest the control member (18) in said operative position and said resting position and further comprises a release button (22) coaxial to said second axis (17) and engaged in a slidable and angularly fixed way through said shaft (15);
the pin (23) being fixed to the button (22) and slidably engaging the slit (24) so as to move, under the thrust of the button (22) away from and towards a releasing position, in which the pin (23) disengages from said end-of-travel means (26).

8. The equipment according to claim 7, **characterized in that** the clamping device (21) further comprises at least one second spring (25) acting on said button (22) for moving and maintaining the pin (23) in a clamped position, in which the pin (23) engages said end-of-travel means (26).

9. Steering equipment for a vehicle comprising a steering unit (1a), which in turn comprises a steering column (2) having a first given longitudinal axis (3); a transmission shaft (4) mounted inside the steering column (2) for rotating about said first axis (3); and a steering wheel (5) mounted on the transmission shaft (4) for controlling steering of at least one wheel (6) of the vehicle; hydraulic means (7) provided between the steering unit (1a) and the wheel (6); a control device (8; 30) comprising a switch (9; 31) and a control member (18; 41), which can move away from and towards a position of actuation of the switch (9; 31) and a shaft (15, 36) having a longitudinal axis (17, 37) fixed to said control member (18, 41), which is mounted so that it can turn about said axis (17, 37) and is provided with an actuator member (27) operable to actuate said switch (9, 31) upon a displacement of the control member (18, 41) from the operative position to the actuation position; and **characterized in that** the control device (8; 30) acting on said hydraulic means (7) for varying the ratio between an angle of rotation of the steering wheel (5) about the first axis (3) and an angle of steering of the wheel (6), said control member (41) being mounted so that it can turn about the axis (37) for oscillating between two said actuation positions; and thrust means being provided for displacing said control member (41) from each of the actuation positions to an operative position provided between the actuation positions and said thrust means comprise at least one spring (44) coaxial with respect to said axis (37) and operable to maintain said control member (41) in said operative position; and said control device (30) comprises two contact elements (46, 47) which are fixed to the steering column (2) and to the lever (41), respectively; the spring (44) having two free ends (45) set on opposite sides of each of the contact elements (46, 47) and operable to engage, respectively, a first and a second of the contact elements (46, 47) upon a displacement of the rod (41) from the operative position to either of the actuation positions.

10. The equipment according to any one of claims 1 to 9, **characterized in that** said control device (8; 30) further comprises an electronic control unit designed to control operation of said hydraulic means (7) according to a signal coming from said switch (9; 31).

## Patentansprüche

1. Lenkausrüstung für ein Fahrzeug, mit einer Lenkeinheit (1a), die ihrerseits eine Lenksäule (2) mit einer ersten vorgegebenen Längsachse (3) umfasst; mit einer Übertragungswelle (4), die im Inneren der Lenksäule (2) für eine Drehung um die erste Achse (3) befestigt ist; und mit einem Lenkrad (5), das auf der Übertragungswelle (4) zur Steuerung der Lenkung von zumindest einem Rad (6) des Fahrzeuges befestigt ist; mit Hydraulikeinrichtungen (7), die zwischen der Lenkeinheit (1a) und dem Rad (6) angeordnet sind; mit einer Steuereinrichtung (8; 30), die einen Schalter (9; 31) und ein Steuerelement (18; 41), das sich von einer Betätigungsposition des Schalters (9; 31) fort und in Richtung auf diese bewegen kann, und eine Welle (15, 36) umfasst, die eine zweite Längsachse (17, 37) aufweist, die an dem Steuerelement (18, 41) befestigt ist, das so befestigt ist, dass es sich um die Achse (17, 37) drehen kann, und mit einem Betätigungselement (27) versehen ist, das zur Betätigung des Schalters (9, 31) bei einer Bewegung des Steuerelementes (18, 41) von der Betriebsstellung auf die Betätigungsstellung betreibbar ist; und
**dadurch gekennzeichnet, dass** die Steuereinrichtung (8; 30) auf die Hydraulikeinrichtungen (7) einwirkt, um das Verhältnis zwischen dem Drehwinkel des Lenkrades (5) um die erste Achse (3) und dem Lenkwinkel des Rades (6) zu ändern, wobei die Steuereinrichtung (8) weiterhin eine Klemmeinrichtung (21) zum Festklemmen des Steuerelementes (18) in der Betriebsstellung aufweist, wobei die Klemmeinrichtung (21) einen Stift (23) umfasst, der quer zu der zweiten Achse (17) eingesetzt und in einer winkelmäßig festen Weise mit der Welle (15) für eine Drehung um die zweite Achse (17) gekoppelt ist, und wobei Bewegungsbegrenzungseinrichtungen (26) betreibbar sind, um den Stift (23) zu arretieren, wenn das Steuerelement (18) in die Betriebsstellung gebracht ist.

2. Ausrüstung nach Anspruch 1, **dadurch gekennzeichnet, dass** das Steuerelement (18) im Wesentlichen die Form eines Kreissektors hat und zwischen der Betätigungsposition und einer Betriebsstellung beweglich ist, in der das Steuerelement (18) im Wesentlichen koaxial zu der ersten Achse (3) ist.

3. Ausrüstung nach Anspruch 2, **dadurch gekennzeichnet, dass** die Steuereinrichtung (8) weiterhin Betätigungseinrichtungen umfasst, die betreibbar sind, um das Steuerelement (18) aus der Betätigungsstellung in die Betriebsstellung zu bewegen.

4. Ausrüstung nach Anspruch 3, **dadurch gekennzeichnet, dass** die Betätigungseinrichtungen zumindest eine erste Feder (20) umfassen, die zum Halten des Steuerelementes (18) in der Betriebsstellung betreibbar ist.

5. Ausrüstung nach Anspruch 4, **dadurch gekennzeichnet, dass** die Betätigungseinrichtungen weiterhin betätigbar sind, um das Steuerelement (18) aus der Betriebsstellung auf eine Ruhestellung zu bewegen; wobei das Steuerelement (18) in der Betriebsstellung in einer ersten Entfernung von dem Lenkrad (5) angeordnet ist, während es in der Ruhestellung in einer zweiten Entfernung von dem Lenkrad (5) angeordnet ist, die größer als die erste Entfernung ist.

6. Ausrüstung nach Anspruch 5, **dadurch gekennzeichnet, dass** die Welle (15) rohrförmig ist und einen Schlitz (24) aufweist, der radial durch die Welle (15) hindurch ausgebildet ist.

7. Ausrüstung nach Anspruch 6, **dadurch gekennzeichnet, dass** die Klemmeinrichtung (21) betreibbar ist, um das Steuerelement (18) in seiner Betriebsstellung und in der Ruhestellung festzulegen, und weiterhin einen Freigabe-Knopf (22) umfasst, der koaxial zu der zweiten Achse (17) angeordnet ist und in gleitender und winkelmäßig festgelegter Weise durch die Welle (15) hindurch festgelegt ist, wobei der Stift (23) an dem Knopf (22) befestigt ist und gleitend int dem Schlitz (24) in Eingriff steht, um sich unter der Druckkraft des Knopfes (22) von der und in Richtung auf die Freigabeposition zu bewegen, in der der Stift (23) außer Eingriff mit den Bewegungsbegrenzungseinrichtungen (26) ist.

8. Ausrüstung nach Anspruch 7, **dadurch gekennzeichnet, dass** die Klemmvorrichtung (21) weiterhin zumindest eine zweite Feder (25) umfasst, die auf den Knopf (25) wirkt, um den Stift (23) in eine geklemmte Position zu bewegen und in dieser zu halten, in der der Stift (23) mit den Bewegungsbegrenzungseinrichtungen (26) in Eingriff kommt.

9. Lenkausrüstung für ein Fahrzeug, mit einer Lenkeinheit (1a), die ihrerseits eine Lenksäule (2) mit einer ersten vorgegebenen Längsachse (3) umfasst; mit einer Übertragungswelle (4), die im Inneren der Lenksäule (2) für eine Drehung um die erste Achse (3) befestigt ist; mit und einem Lenkrad (5), das auf der Übertragungswelle (4) zur Steuerung der Lenkung von zumindest einem Rad (6) des Fahrzeuges befestigt ist; mit Hydraulikeinrichtungen (7), die zwischen der Lenkeinheit (1a) und dem Rad (6) angeordnet sind; mit einer Steuereinrichtung (8; 30), die einen Schalter (9; 31) und ein Steuerelement (18; 41) umfasst, das sich von einer Betätigungsstellung des Schalters (9; 31) fort und in Richtung auf diese bewegen kann, und mit einer Welle (15; 36), die eine Längsachse (17, 37) aufweist, die an dem Steuerelement (18, 41) befestigt ist, das so befestigt ist, dass es sich um die Achse (17, 37) drehen kann und mit einem Betätigungselement (27) versehen ist, das zur Betätigung des Schalters (9, 31) bei einer Bewegung des Steuerelementes (18, 41) von der Betriebsstellung auf die Betätigungsstellung betreibbar ist; und **dadurch gekennzeichnet, dass** die Steuereinrichtung (8; 30) auf die Hydraulikeinrichtungen (7) einwirkt, um das Verhältnis zwischen dem Drehwinkel des Lenkrades (5) um die erste Achse (3) und einem Lenkwinkel des Rades (6) zu ändern, wobei das Steuerelement (41) so befestigt ist, dass es sich um die Achse (37) drehen kann, um zwischen zwei der genannten Betätigungsstellungen zu schwingen; und wobei Druckeinrichtungen zur Bewegung des Steuerelementes (41) von jeder der Betätigungsstellungen aus auf eine Betriebsstellung vorgesehen ist, die zwischen den Betätigungsstellungen angeordnet ist, und wobei die Druckeinrichtungen zumindest eine Feder (44) umfassen, die koaxial bezüglich der Achse (37) ist und betreibbar ist, um das Steuerelement (41) in der Betriebsstellung zu halten; und dass die Steuereinrichtung (30) zwei Kontaktelemente (46, 47) umfasst, die an der Lenksäule zwei bzw. an dem Hebel (41) befestigt sind, wobei die Feder (44) freie Enden (45) aufweist, die an entgegengesetzten Enden jedes der Kontaktelemente (46, 47) angeordnet und betreibbar sind, um ein erstes bzw. ein zweites der Kontaktelemente (46, 47) in Eingriff zu bringen, wenn eine Bewegung der Stange (41) von der Betriebsstellung auf eine der Betätigungsstellungen erfolgt.

10. Ausrüstung nach einem der Ansprüche 1 bis 9, **dadurch gekennzeichnet, dass** die Steuereinrichtung (8; 30) weiterhin eine elektronische Steuereinheit umfasst, die zur Steuerung der Betätigung der Hydraulikeinrichtungen (7) in Abhängigkeit von einem Signal ausgelegt ist, das von dem Schalter (9; 31) kommt.

## Revendications

1. Équipement de direction d'un véhicule comprenant un ensemble de direction ( 1a ), qui à son tour comprend une colonne de direction ( 2 ) ayant un premier axe longitudinal donné ( 3 ), un arbre de transmission
( 4 ) monté à l'intérieur de la colonne de direction (2) de sorte à tourner autour du dit premier axe ( 3 ) et un volant de direction ( 5 ) monté sur l'arbre de transmission ( 4 ) pour commander la direction d'au moins une roue ( 6 ) du véhicule, un dispositif hydraulique ( 7 ) prévu entre l'ensemble de direction ( 1a ) et la roue ( 6 ), un dispositif de commande ( 8, 30 ) comprenant un commutateur ( 9, 31) et un organe de commande ( 18, 41 ) mobile en s'écartant et vers une position d'actionnement du commutateur
( 9, 31) et un arbre ( 15, 36 ) ayant un second axe longitudinal ( 17, 37 ) fixé au dit organe de commande ( 18, 41 ), qui est monté de façon à pouvoir tourner autour du dit axe ( 17, 37 ) et est pourvu d'un organe actionneur (27) opérationnel pour actionner ledit commutateur ( 9, 31 ) sur un déplacement de l'organe de commande ( 18, 41) de la position fonctionnelle à la position d'actionnement, et
**caractérisé en ce que** ledit dispositif de commande ( 8, 30) agit sur ledit dispositif hydraulique ( 7 ) pour faire varier le rapport entre un angle de rotation du volant ( 5 ) autour du premier axe ( 3 ) et un angle de direction de la roue ( 6 ) et le dispositif de commande ( 8 ) comprend en plus un dispositif de bridage ( 21 ) pour brider l'organe de commande ( 18 ) dans ladite position de fonctionnement, le dispositif de bridage ( 21 ) comprend une broche ( 23 ) disposée transversalement au dit second axe ( 17 ) et couplée d'une manière angulairement fixe au dit arbre ( 15 ) pour tourner autour du second axe ( 17 ), et un dispositif de fin de course (26) opérationnel pour arrêter la broche ( 23 ) lorsque l'organe de commande ( 18 ) est disposé en position fonctionnelle.

2. Équipement selon la revendication 1, **caractérisé en ce que** l'organe de commande ( 18 ) a sensiblement la forme du secteur d'un cercle et est mobile entre ladite position d'actionnement et une position fonctionnelle, dans laquelle l'organe de commande ( 18 ) est sensiblement coaxial avec ledit premier axe ( 3 ).

3. Équipement selon la revendication 2, **caractérisé en ce que** le dispositif de commande ( 8 ) comprend en plus des moyens d'actionneur opérationnels pour déplacer l'organe de commande ( 18 ) de la position d'actionnement à la position fonctionnelle.

4. Équipement selon la revendication 3, **caractérisé en ce que** les dits moyens d'actionneur comprennent au moins un premier ressort ( 20 ) pouvant fonctionner pour maintenir l'organe de commande ( 18 ) dans ladite position fonctionnelle.

5. Équipement selon la revendication 4, **caractérisé en ce que** les dits moyens d'actionneur sont opérationnels en plus pour déplacer l'organe de commande ( 18 ) de ladite position fonctionnelle vers une position de repos, l'organe de commande ( 18 ) étant positionné, en position fonctionnelle, à une première distance du volant de direction ( 5 ) et, lorsqu'il est dans la position de repos, à une seconde distance du volant de direction ( 5 ) supérieure à la première distance.

6. Équipement selon la revendication 5, **caractérisé en ce que** ledit arbre ( 15 ) est tubulaire et comporte une fente ( 24 ) façonnée radialement au travers de l'arbre ( 15 ).

7. Équipement selon la revendication 6, **caractérisé en ce que** le dispositif de bridage ( 21 ) est opérationnel pour arrêter l'organe de commande ( 18 ) dans ladite position fonctionnelle et ladite position de repos et comprend en plus un bouton de dégagement (22) coaxial au dit second axe ( 17 ) et engagé d'une manière coulissante et angulairement fixe au travers du dit arbre ( 15 ), la broche (23) étant fixée au bouton (22) et engageant de manière coulissante la fente ( 24 ) de façon à être déplacée, sous une poussée du bouton, (22) en s'écartant et vers une position de dégagement dans laquelle la broche ( 23 ) se désengage du dit dispositif de fin de course (26).

8. Équipement selon la revendication 7, **caractérisé en ce que** le dispositif de bridage ( 21 ) comprend en plus au moins un second ressort ( 25 ) agissant sur ledit bouton (22) pour déplacer et maintenir la broche
( 23 ) dans une position bridée, dans laquelle la broche ( 23 ) engage ledit dispositif de fin de course (26).

9. Équipement de direction d'un véhicule comprenant un ensemble de direction ( 1a ), qui à son tour comprend une colonne de direction (2) ayant un premier axe longitudinal donné ( 3 ), un arbre de transmission
( 4 ) monté à l'intérieur de la colonne de direction ( 2 ) de sorte à tourner autour du dit premier axe ( 3 ) et un volant de direction ( 5 ) monté sur l'arbre de transmission ( 4 ) pour commander la direction d'au moins une roue ( 6 ) du véhicule, un dispositif hydraulique ( 7 ) prévu entre l'ensemble de direction ( 1a ) et la roue ( 6 ), un dispositif de commande ( 8, 30) comprenant un commutateur ( 9, 31) et un organe de commande ( 18, 41) mobile en s'écartant et vers une position d'actionnement du commutateur
( 9, 31 ) et un arbre ( 15, 36 ) ayant un axe longitudinal ( 17, 37 ) fixé au dit organe de commande ( 18, 41 ), qui est monté de façon à pouvoir tourner autour du dit axe ( 17, 37) et est pourvu d'un organe actionneur ( 27 ) opérationnel pour actionner ledit commutateur ( 9, 31) sur un déplacement de l'organe de commande ( 18, 41) de la position fonctionnelle à la position d'actionnement, et
**caractérisé en ce que** ledit dispositif de commande ( 8, 30) agit sur ledit dispositif hydraulique ( 7 ) pour faire varier le rapport entre un angle de rotation du volant ( 5 ) autour du premier axe ( 3 ) et un angle de direction de la roue ( 6 ), ledit organe de commande ( 41 ) étant monté de manière à pouvoir tourner autour de l'axe ( 37 ) pour osciller entre deux positions d'actionnement, et le dit dispositif de poussée étant pourvu pour déplacer ledit organe de commande ( 41 ) à partir de chacune des positions d'actionnement vers une position fonctionnelle prévue entre les positions d'actionnement, ledit dispositif de poussée comprend au moins un ressort ( 44 ) coaxial par rapport au dit axe ( 37 ) et opérationnel pour maintenir ledit organe de commande ( 41 ) dans ladite position fonctionnelle et ledit dispositif de commande ( 30 ) comprend deux éléments de contact ( 46, 47) qui sont fixés respectivement à la colonne de direction (2) et au levier ( 41 ), le ressort ( 44 ) ayant deux extrémités libres ( 45 ) placées sur des côtés opposés de chacun des éléments de contact ( 46, 47) et opérationnelles pour enclencher respectivement un premier et un second des éléments de contact ( 46, 47 ) sur un déplacement de la barre ( 41 ) de la position fonctionnelle à l'une des positions d'actionnement.

10. Équipement selon l'une quelconque des revendications 1 à 9, **caractérisé en ce que** ledit dispositif de commande ( 8, 30) comprend en plus une unité de commande électronique destinée à commander le fonctionnement du dit dispositif hydraulique ( 7 ) selon un signal venant du dit commutateur ( 9, 31 ).
